(19) Europäisches Patentamt / European Patent Office / Office européen des brevets

(11) **EP 4 318 647 A1**

(12) **EUROPEAN PATENT APPLICATION**
published in accordance with Art. 153(4) EPC

(43) Date of publication:
**07.02.2024 Bulletin 2024/06**

(21) Application number: **22778363.6**

(22) Date of filing: **09.02.2022**

(51) International Patent Classification (IPC):
**H01M 4/133** (2010.01)        **H01M 4/1393** (2010.01)
**H01M 4/587** (2010.01)

(52) Cooperative Patent Classification (CPC):
Y02E 60/10; Y02P 70/50

(86) International application number:
**PCT/CN2022/075646**

(87) International publication number:
**WO 2022/206175 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021  CN 202110333773**

(71) Applicant: **Ningde Amperex Technology Limited
Ningde, Fujian 352100 (CN)**

(72) Inventors:
• **CAI, Yuxin**
  **Ningde, Fujian 352100 (CN)**
• **FENG, Pengyang**
  **Ningde, Fujian 352100 (CN)**
• **DONG, Jiali**
  **Ningde, Fujian 352100 (CN)**
• **XIE, Yuansen**
  **Ningde, Fujian 352100 (CN)**

(74) Representative: **Klunker IP
Patentanwälte PartG mbB
Destouchesstraße 68
80796 München (DE)**

(54) **NEGATIVE ELECTRODE, ELECTROCHEMICAL DEVICE COMPRISING NEGATIVE ELECTRODE, AND ELECTRONIC DEVICE**

(57)     This application relates to a negative electrode, an electrochemical device containing same, and an electronic device. The negative electrode includes a current collector and a negative active material layer disposed on the current collector. The negative active material layer includes negative active material particles. The negative active material particles include secondary particles. The negative active material layer includes a pore A. A diameter of the pore A is 59 nm to 73 nm when tested by a mercury intrusion porosimetry. A ratio C004/C 110 of the negative active material layer is 6 to 20. The electrochemical device using the negative electrode according to this application possesses a relatively high capacity and improved performance of resistance to cycle expansion.

Figure 1

**Description**

**TECHNICAL FIELD**

This application relates to the field of energy storage, and in particular, to a negative electrode, an electrochemical device containing same, and an electronic device, especially a lithium-ion battery.

**BACKGROUND**

Electrochemical devices (such as a lithium-ion battery) are widely used by virtue of advantages such as environmental friendliness, a high working voltage, a high specific capacity, and a long cycle life, and have become the most promising new green chemical power source in the world today. A small-sized lithium-ion battery is usually used as a power supply for a portable electronic communications device (for example, a portable camcorder, a mobile phone, or a notebook computer), especially for a high-performance portable device. In recent years, a medium-sized and large-sized lithium-ion battery characterized by a high output voltage has been developed for use in an electric vehicle (EV) and a large-scale energy storage system (ESS). A key technical issue to be urgently solved that accompanies the wide application of the lithium-ion battery is to improve cycle performance of the battery. Improving an active material in an electrode is one of approaches to solving the issue.

A main practice in the prior art is to coat and carbonize graphite, and suppress expansion between particles by using a surface coating layer. By coating, polarization is reduced, and accumulation of side reaction products is reduced, thereby mitigating the problem of cycle expansion. However, this practice severely affects an energy density of the lithium-ion battery, and one performance indicator is improved at the cost of another, making it difficult to improve the comprehensive performance of the lithium-ion battery in use. In view of this, it is necessary to provide an improved negative active material, a negative electrode made of the negative active material, an electrochemical device, and an electronic device.

**SUMMARY**

Embodiments of this application provide a negative electrode, an electrochemical device containing same, and an electronic device in an attempt to solve at least one problem in the related art to at least some extent.

In an embodiment, this application provides a negative electrode. The negative electrode includes a current collector and a negative active material layer disposed on the current collector. The negative active material layer includes negative active material particles. The negative active material particles include secondary particles. The negative active material layer includes a pore A. A diameter of the pore A is 59 nm to 73 nm when tested by a mercury intrusion porosimetry. A ratio C004/C110 of the negative active material layer is 6 to 20.

In some embodiments, when tested by the mercury intrusion porosimetry, a differential mercury intake of the pore A is 0.150 to 0.190 mL/g·$\mu$m$^{-1}$.

In some embodiments, the negative active material layer includes a pore B. When tested by the mercury intrusion porosimetry, a diameter of the pore B is 661.6 nm to 793.3 nm, and a differential mercury intake of the pore B is 0.160 to 0.230 mL/g·$\mu$m$^{-1}$.

In some embodiments, a volume ratio between the pore B and the pore A is 0.7:1 to 1.42:1.

In some embodiments, the negative active material particles satisfy at least one of conditions (a) to (d): (a) $D_{v50}$ of the negative active material particles is 7.2 to 21.6 $\mu$m; (b) $D_{v90}$ of the negative active material particles is 28.4 to 40 $\mu$m; (c) $D_{n10}$ of the negative active material particles is 1.4 to 9.4 $\mu$m; or (d) $D_{v90}$ and $D_{n10}$ of the negative active material particles satisfy: $D_{v90}/D_{n10} \leq 26$.

In some embodiments, a powder particle size of the negative active material particles before being pressed is $D_{1v50}$, a powder particle size of the negative active material particles after being pressed under a pressure of 1 ton is $D_{2v50}$, and $(D_{1v50} - D_{2v50})/D_{1v50} \times 100\% \leq 25\%$.

In some embodiments, a specific surface area of the negative active material particles is 0.8 to 2.0 m$^2$/g.

In some embodiments, a specific surface area of the negative active material particles before being pressed is $B_1$, a specific surface area of the negative active material particles after being pressed under a pressure of 1 ton is $B_2$, and $(B_2 - B_1)/B_1 \times 100\% \leq 140\%$.

In another embodiment, this application provides an electrochemical device. The electrochemical device includes the negative electrode according to the embodiments of this application.

In some embodiments, when the electrochemical device is discharged to a voltage of 3 V, a specific surface area of the negative active material particles is 1.9 to 2.4 m$^2$/g.

In some embodiments, when the electrochemical device is charged to a voltage of 4.45 V, as tested by a differential scanning calorimetry (DSC), a maximum exothermic peak of the negative active material layer is 280 to 330 °C.

In some embodiments, when the electrochemical device is discharged to a voltage of 3 V, a powder particle size of negative active material particles is $D_{av50}$, a powder particle size of the negative active material particles after being pressed under a pressure of 1 ton is $D_{bv50}$, and $(D_{av50} - D_{bv50})/D_{av50} \times 100\% \leq 2\%$.

In some embodiments, when the electrochemical device is discharged to a voltage of 3 V, a specific surface area of the negative active material particles before being pressed is $B_{11}$, a specific surface area of the negative active material particles after being pressed under a pressure of 1 ton is $B_{22}$, and $(B_{22} - B_{11})B_{11} \times 100\% \leq 40\%$.

In another embodiment, this application provides an electronic device. The electronic device includes the electrochemical device according to the embodiments of this application.

This application improves the capacity of the lithium-ion battery and the performance of resistance to cycle expansion of the lithium-ion battery by optimizing an ontological structure of the negative active material particles and the degree of compounding between the negative active material particles.

Additional aspects and advantages of the embodiments of this application will be described and illustrated in part later herein or expounded through implementation of the embodiments of this application.

## BRIEF DESCRIPTION OF DRAWINGS

For ease of describing the embodiments of this application, the following outlines the drawings needed for describing the embodiments of this application. Evidently, the drawings outlined below are merely a part of embodiments in this application. Without making any creative efforts, a person skilled in the art can still obtain the drawings of other embodiments according to the structures illustrated in these drawings.

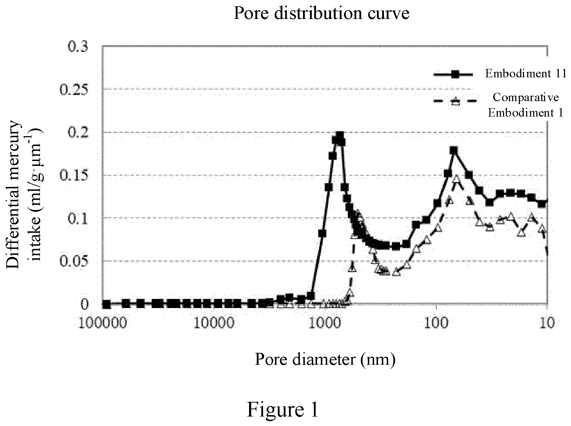

Figure 1 shows a differential mercury intake curve of a negative active material layer according to Embodiment 11 and Comparative Embodiment 1 of this application.

## DETAILED DESCRIPTION

Embodiments of this application will be described in detail below. The embodiments of this application are not to be construed as a limitation on this application.

In this application, $D_{v50}$ is a particle size of the negative active material measured when the cumulative volume percentage of the negative active material particles reaches 50% in a volume-based particle size distribution by starting from small-diameter particles, as measured in $\mu m$; $D_{v90}$ is a particle size of the negative active material measured when the cumulative volume percentage of the negative active material particles reaches 90% in a volume-based particle size distribution by starting from small-diameter particles, as measured in $\mu m$; and $D_{n10}$ is a particle size of the negative active material measured when the cumulative number percentage of the negative active material particles reaches 10% in a number-based particle size distribution by starting from small-diameter particles, as measured in $\mu m$.

In addition, a quantity, a ratio, or another numerical value herein is sometimes expressed in the format of a range. Understandably, the format of a range is for convenience and brevity, and needs to be flexibly understood to include not only the numerical values explicitly specified and defined in the range, but also all individual numerical values or sub-ranges covered in the range as if each individual numerical value and each sub-range were explicitly specified.

In the description of specific embodiments and claims, a list of items referred to by using the terms such as "one of", "one thereof", "one type of" or other similar terms may mean any one of the listed items. For example, if items A and B are listed, the phrase "one of A and B" means A alone, or B alone. In another example, if items A, B, and C are listed, then the phrases "one of A, B, and C" and "one of A, B, or C" mean: A alone; B alone; or C alone. The item A may include a single element or a plurality of elements. The item B may include a single element or a plurality of elements. The item C may include a single element or a plurality of elements.

In the embodiments and claims, a list of items referred to by using the terms such as "at least one of", "at least one thereof", "at least one type of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

### Electrochemical device

In an embodiment, this application provides an electrochemical device. The electrochemical device includes a positive electrode, a negative electrode, a separator, and an electrolytic solution.

In some embodiments, the electrochemical device according to this application includes, but is not limited to: a primary battery or a secondary battery.

In some embodiments, the electrochemical device is a lithium secondary battery.

In some embodiments, the lithium secondary battery includes, but is not limited to, a lithium metal secondary battery, a lithium-ion secondary battery, a lithium polymer secondary battery, or a lithium-ion polymer secondary battery.

I. Negative electrode

An embodiment of this application provides a negative electrode. The negative electrode includes a current collector and a negative active material layer disposed on the current collector. The negative active material layer includes negative active material particles. The negative active material particles include secondary particles. The negative active material layer includes a pore A. A diameter of the pore A is 59 nm to 73 nm when tested by a mercury intrusion porosimetry. A ratio C004/C110 of the negative active material layer is 6 to 20.

In some embodiments, the diameter of the pore A is 59 nm, 60 nm, 61 nm, 62 nm, 63 nm, 64 nm, 65 nm, 66 nm, 67 nm, 68 nm, 69 nm, 70 nm, 71 nm, 73 nm, or a range formed by any two thereof.

In some embodiments, the ratio C004/C110 of the negative active material layer is 6, 8, 10, 12, 14, 16, 18, or 20, or a range formed by any two thereof.

In some embodiments, when tested by the mercury intrusion porosimetry, a differential mercury intake of the pore A is 0.150 to 0.190 mL/g·$\mu$m$^{-1}$.

In some embodiments, the differential mercury intake of the pore A is 0.150 mL/g·$\mu$m$^{-1}$, 0.160 mL/g·$\mu$m$^{-1}$, 0.170 mL/g·$\mu$m$^{-1}$, 0.180 mL/g·$\mu$m$^{-1}$, 0.190 mL/g·$\mu$m$^{-1}$, or a range formed by any two thereof.

In some embodiments, the negative active material layer includes a pore B. When tested by the mercury intrusion porosimetry, a diameter of the pore B is 660 nm to 800 nm, and a differential mercury intake of the pore B is 0.160 to 0.230 mL/g·$\mu$m$^{-1}$.

In some embodiments, the diameter of the pore B is 660 nm, 670 nm, 680 nm, 690 nm, 700 nm, 710 nm, 720 nm, 730 nm, 740 nm, 750 nm, 760 nm, 770 nm, 780 nm, 790 nm, 790 nm, 800 nm, or a range formed by any two thereof.

In some embodiments, a volume ratio between the pore B and the pore A is 0.7:1 to 1.42:1. In some embodiments, the volume ratio between the pore B and the pore A is 0.7:1, 0.8:1, 0.9:1, 1:1, 1.1:1, 1.2:1, 1.3:1, 1.4:1, 1.42:1, or a range formed by any two thereof. When the volume ratio between the pore B and the pore A falls within the above range, the area of exposure of the negative active material exposed to the electrolytic solution can be controlled, side reactions can be reduced, and decrease of a first-cycle Coulombic efficiency is avoided. In addition, high fluidity and infiltration effects of the electrolytic solution can be ensured, and increase of impedance can be avoided.

In some embodiments, the negative active material particles satisfy at least one of conditions (a) to (d): (a) $D_{v50}$ of the negative active material particles is 7.2 to 21.6 $\mu$m; (b) $D_{v90}$ of the negative active material particles is 28.4 to 40.0 $\mu$m; (c) $D_{n10}$ of the negative active material particles is 1.4 to 9.4 $\mu$m; or (d) $D_{v90}$ and $D_{n10}$ of the negative active material particles satisfy: $D_{v90}/D_{n10} \leq 26$.

In some embodiments, $D_{v50}$ of the negative active material particles is 7.2 $\mu$m, 8 $\mu$m, 10 $\mu$m, 12 $\mu$m, 14 $\mu$m, 16 $\mu$m, 18 $\mu$m, 20 $\mu$m, 21.6 $\mu$m, or a range formed by any two thereof.

In some embodiments, $D_{v90}$ of the negative active material particles is 28.4 $\mu$m, 30 $\mu$m, 32 $\mu$m, 34 $\mu$m, 35.7 $\mu$m, 38 $\mu$m, 40 $\mu$m, or a range formed by any two thereof.

In some embodiments, $D_{n10}$ of the negative active material particles is 1.4 $\mu$m, 2.0 $\mu$m, 3.0 $\mu$m, 4.0 $\mu$m, 5.0 $\mu$m, 6.0 $\mu$m, 7.0 $\mu$m, 8.0 $\mu$m, 9.4 $\mu$m, or a range formed by any two thereof.

In some embodiments, the ratio $D_{v90}/D_{n10}$ is 1, 2, 3, 4, 5, 6, 7, 8, 9, 10, 11, 12, 13, 14, 15, 16, 17, 18, 19, 20, 21, 22, 23, 24, 25, 26, or a range formed by any two thereof.

In some embodiments, a powder particle size of the negative active material particles before being pressed is $D_{1v50}$, a powder particle size of the negative active material particles after being pressed under a pressure of 1 ton is $D_{2v50}$, and $(D_{1v50} - D_{2v50})/D_{1v50} \times 100\% \leq 25\%$.

In some embodiments, the value of $(D_{1v50} - D_{2v50})/D_{1v50} \times 100\%$ is 1%, 3%, 6%, 9%, 12%, 14%, 16%, 18%, 20%, 22%, 24%, 25%, or a range formed by any two thereof. When the value of $(D_{1v50} - D_{2v50})/D_{1v50} \times 100\%$ falls within the above range, the bonding strength of the negative active material particles is relatively high, the particles are more stable during cycles of the electrochemical device, and the expansion rate of the electrochemical device is reduced.

In some embodiments, the specific surface area of the negative active material particles is 0.8 to 2.0 m$^2$/g. In some embodiments, the specific surface area of the negative active material particles is 0.8 m$^2$/g, 0.9 m$^2$/g, 1.0 m$^2$/g, 1.1 m$^2$/g, 1.2 m$^2$/g, 1.3 m$^2$/g, 1.4 m$^2$/g, 1.6 m$^2$/g, 1.7 m$^2$/g, 1.8 m$^2$/g, 2.0 m$^2$/g, or a range formed by any two thereof.

In some embodiments, the specific surface area of the negative active material particles before being pressed is $B_1$, the specific surface area of the negative active material particles after being pressed under a pressure of 1 ton is $B_2$, and $(B_2 - B_1)/B_1 \times 100\% \leq 140\%$. In some embodiments, the value of $(B_2 - B_1)/B_1 \times 100\%$ is 10%, 20%, 30%, 40%, 50%, 60%, 70%, 80%, 90%, 100%, 110%, 120%, 130%, 140%, or a range formed by any two thereof. When the value of $(B_2 - B_1)B_1 \times 100\%$ falls within the above range, the side reactions of the electrochemical device are reduced, and the expansion rate is reduced.

In some embodiments, the negative active material is graphite particles. In some embodiments, the negative active material includes primary graphite particles and secondary graphite particles. In some embodiments, the pore A is a packing void between primary graphite particles in the secondary graphite particles. In some embodiments, the pore B is mainly a void caused by the packing of the secondary graphite particles.

In some embodiments, the secondary graphite particles are prepared from primary graphite particles and a binder. In some embodiments, the binder includes, but is not limited to: low-temperature asphalt, medium-temperature asphalt, high-temperature asphalt, or resin.

In some embodiments, when the electrochemical device is discharged to a voltage of 3 V, the specific surface area of the negative active material is 1.9 to 2.4 $m^2/g$. In some embodiments, when the electrochemical device is discharged to a voltage of 3 V, the specific surface area of the negative active material is 1.9 $m^2/g$, 2.0 $m^2/g$, 2.1 $m^2/g$, 2.2 $m^2/g$, 2.3 $m^2/g$, 2.4 $m^2/g$, or a range formed by any two thereof.

In some embodiments, when the electrochemical device is charged to a voltage of 4.45 V, as tested by a differential scanning calorimetry (DSC), a maximum exothermic peak of the negative active material layer is 280 to 330 °C. In some embodiments, when the electrochemical device is charged to a voltage of 4.45 V, as tested by the DSC, the maximum exothermic peak of the negative active material layer is 280 °C, 286 °C, 290 °C, 296 °C, 300 °C, 306 °C, 312 °C, 318 °C, 322 °C, 326 °C, 328 °C, 330 °C, or a range formed by any two thereof.

In some embodiments, when the electrochemical device is discharged to a voltage of 3 V, a powder particle size of negative active material particles is $D_{av50}$, a powder particle size of the negative active material after being pressed under a pressure of 1 ton is $D_{bv50}$, and $(D_{av50} - D_{bv50})/D_{av50} \times 100\% \leq 2\%$.

In some embodiments, the value of $(D_{aV50} - D_{bv50})/D_{av50} \times 100\%$ is 0.2%, 0.4%, 0.6%, 0.8%, 1.2%, 1.4%, 1.6%, 1.8%, 2%, or a range formed by any two thereof.

In some embodiments, when the electrochemical device is discharged to a voltage of 3 V, the specific surface area of the negative active material particles before being pressed is $B_{11}$, the specific surface area of the negative active material particles after being pressed under a pressure of 1 ton is $B_{22}$, and $(B_{22} - B_{11})B_{11} \times 100\% \leq 40\%$. In some embodiments, the value of $(B_{22} - B_{11})/B_{11} \times 100\%$ is 4%, 8%, 10%, 12%, 16%, 18%, 20%, 24%, 28%, 32%, 34%, 36%, 38%, 40%, or a range formed by any two thereof.

In some embodiments, the electrochemical device includes a lithium-ion battery. After undergoing 500 cycles at 25 °C, the lithium-ion battery achieves an expansion rate lower than 9%. In some embodiments, the expansion rate of the lithium-ion battery is less than 8% or less than 7%.

In some embodiments, the negative active material layer further includes a binder. In some embodiments, the binder includes, but is not limited to: polyvinyl alcohol, carboxymethyl cellulose, sodium carboxymethyl cellulose, hydroxypropyl cellulose, diacetyl cellulose, polyvinyl chloride, carboxylated polyvinyl chloride, polyvinyl fluoride, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the negative active material layer includes a conductive material. In some embodiments, the conductive material includes, but is not limited to: natural graphite, artificial graphite, carbon black, acetylene black, Ketjen black, carbon fiber, metal powder, metal fiber, copper, nickel, aluminum, silver, or a polyphenylene derivative.

In some embodiments, the current collector includes, but is not limited to: a copper foil, a nickel foil, a stainless steel foil, a titanium foil, foamed nickel, foamed copper, or a polymer substrate coated with a conductive metal.

In some embodiments, the negative electrode may be obtained by the following method: mixing an active material, a conductive material, and a binder in a solvent to prepare an active material composite, and coating the active material composite onto the current collector.

In some embodiments, the solvent may include, but is not limited to N-methylpyrrolidone.

II. Positive electrode

The material, composition, and manufacturing method of the positive electrode that are applicable to the embodiments of this application include any technology disclosed in the prior art.

In some embodiments, the positive electrode includes a current collector and a positive active material layer disposed on the current collector.

In some embodiments, the positive active material includes, but is not limited to, lithium cobalt oxide ($LiCoO_2$), a lithium nickel-cobalt-manganese (NCM) ternary material, lithium ferrous phosphate ($LiFePO_4$), or lithium manganese oxide ($LiMn_2O_4$).

In some embodiments, the positive active material layer further includes a binder, and optionally includes a conductive material. The binder improves bonding between particles of the positive active material and bonding between the positive active material and a current collector.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, nylon, or the like.

In some embodiments, the conductive material includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may include, but is not limited to aluminum.

The positive electrode may be prepared according to a preparation method known in the art. For example, the positive electrode may be obtained by the following method: mixing an active material, a conductive material, and a binder in a solvent to prepare an active material composite, and coating the active material composite onto the current collector. In some embodiments, the solvent may include, but is not limited to N-methylpyrrolidone.

III. Electrolytic solution

The electrolytic solution applicable to the embodiments of this application may be an electrolytic solution known in the prior art.

In some embodiments, the electrolytic solution includes an organic solvent, a lithium salt, and an additive. The organic solvent of the electrolytic solution according to this application may be any organic solvent known in the prior art that can be used as a solvent of the electrolytic solution. An electrolyte used in the electrolytic solution according to this application is not limited, and may be any electrolyte known in the prior art. The additive of the electrolytic solution according to this application may be any additive known in the prior art that can be used as an additive of the electrolytic solution.

In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of an organic lithium salt or an inorganic lithium salt.

In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide LiN $(CF_3SO_2)_2$ (LiTFSI), lithium bis(fluorosulfonyl)imide Li($N(SO_2F)_2$) (LiFSI), lithium bis(oxalate) borate $LiB(C_2O_4)_2$ (LiBOB), or lithium difluoro(oxalate)borate $LiBF_2(C_2O_4)$ (LiDFOB).

In some embodiments, a concentration of the lithium salt in the electrolytic solution is 0.5 to 3 mol/L, 0.5 to 2 mol/L, or 0.8 to 1.5 mol/L.

IV Separator

In some embodiments, a separator is disposed between the positive electrode and the negative electrode to prevent short circuit. The material and the shape of the separator applicable to an embodiment of this application are not particularly limited, and may be based on any technology disclosed in the prior art. In some embodiments, the separator includes a polymer or an inorganic compound or the like formed from a material that is stable to the electrolytic solution according to this application.

For example, the separator may include a substrate layer and a surface treatment layer. The substrate layer is a non-woven fabric, film or composite film, which, in each case, have a porous structure. The material of the substrate layer is selected from at least one of polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound.

The inorganic compound layer includes inorganic particles and a binder. The inorganic particles are selected from a combination of one or more of alumina, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from a combination of one or more of polyvinylidene fluoride, poly(vinylidene fluoride-co-hexafluoropropylene), polyamide, polyacrylonitrile, polyacrylate, polyacrylic acid, polyacrylate, polyvinylpyrrolidone, polyvinyl ether, poly methyl methacrylate, polytetrafluoroethylene, and polyhexafluoropropylene.

The polymer layer includes a polymer, and the material of the polymer is selected from at least one of a polyamide, a polyacrylonitrile, an acrylate polymer, a polyacrylic acid, a polyacrylate, a polyvinylpyrrolidone, a polyvinyl ether, a polyvinylidene fluoride, or a poly(vinylidene fluoride-hexafluoropropylene).

**Electronic device**

The electronic device according to this application may be any device that uses the electrochemical device according to the embodiment of this application.

In some embodiments, the electronic device includes, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, a power tool, a flashlight, a camera, a large household battery, a lithium-ion capacitor, or the like.

The following describes preparation of a lithium-ion battery as an example with reference to specific embodiments. A person skilled in the art understands that the preparation method described in this application are merely examples. Any other appropriate preparation methods fall within the scope of this application.

**Embodiments**

The following describes performance evaluation of the lithium-ion batteries according to the embodiments and comparative embodiments of this application.

I. Preparing a lithium-ion battery

1. Preparing a negative electrode

1) Preparing a negative active material

a) Using petroleum coke as a raw material (that is, a graphite precursor), evenly mixing, at a specified ratio, the petroleum coke with high-temperature asphalt serving as a binder, and then feeding the mixture into a horizontal vessel, heating up to a temperature of 460 °C to 550 °C, and keeping the temperature for 3 hours to obtain a granulated semi-manufacture; and b) then performing high-temperature graphitization treatment, where the graphitization temperature is 2500 °C to 3200 °C and the graphitization time is 10 to 200 hours, so as to obtain a graphite negative active material. Table 1 shows specific process parameters.

2) Preparing a negative electrode

Dispersing the prepared graphite negative active material, styrene butadiene rubber (SBR), and sodium carboxymethyl cellulose (CMC) in deionized water at a weight ratio of 97.7: 1.2: 1.1, and stirring thoroughly and mixing evenly to obtain a negative slurry. Coating a copper foil with acetylene black to obtain a negative current collector. Coating the negative current collector with the negative slurry, and performing drying and cold pressing to obtain a negative electrode.

Graphite particles of different diameters may be obtained by crushing and grading the raw material based on any known technique.

2. Preparing a positive electrode

Stirring and mixing lithium cobalt oxide ($LiCoO_2$), acetylene black, and polyvinylidene difluoride (PVDF) at a weight ratio of 96: 2: 2 in an appropriate amount of N-methylpyrrolidone (NMP) thoroughly to form a homogeneous positive slurry, coating a positive current collector aluminum foil with the slurry, and performing drying and cold pressing to obtain a positive electrode.

3. Preparing an electrolytic solution

Mixing ethylene carbonate (EC), propylene carbonate (PC), and diethyl carbonate (DEC) at a weight ratio of 1: 1: 1 in a dry argon environment, adding $LiPF_6$, and mixing evenly. Adding 3 wt% fluoroethylene carbonate and 2 wt% adiponitrile, and mixing evenly to obtain an electrolytic solution, where the concentration of $LiPF_6$ is 1.15 mol/L.

4. Preparing a separator

Using a 12 μm-thick polyethylene (PE) porous polymer film as a separator.

5. Preparing a lithium-ion battery

Stacking the positive electrode, the separator, and the negative electrode sequentially, placing the separator between positive electrode and the negative electrode to serve a separation function, and winding them to obtain a bare cell; welding tabs and then putting the bare cell into an outer package made of an aluminum laminated film foil, and injecting the prepared electrolytic solution into the dried bare cell, and performing steps such as vacuum packaging, standing, chemical formation, reshaping, and capacity test to obtain a lithium-ion battery.

II. Test methods

1. Method for testing pore size distribution of the negative active material layer (mercury intrusion porosimetry)

Measuring the pore size distribution of the negative active material layer by using a MicroActive AutoPore V9600, which is an automatic mercury intrusion porosimeter:

Discharging a battery to a voltage of 3 V, disassembling the battery, and taking out the negative electrode, and immersing the negative electrode in a dimethyl carbonate solution for 5 hours, and then drying the negative electrode (containing a negative active material layer and a current collector), and then loading the negative electrode into a dilatometer. Sealing the dilatometer and then putting it together with the negative electrode into a mercury porosimeter to test the pore diameter distribution and the pore volume of the negative active layer.

Figure 1 shows a differential mercury intake curve according to Embodiment 11 and Comparative Embodiment 1 of this application. The horizontal coordinate corresponding to the peak in Figure 1 represents a pore diameter distribution range, and the area of the peak represents the volume of pores per unit mass of material. The pore diameters corresponding to two highest peak values are selected herein to represent the diameters of pores A and B respectively. The pore A is smaller than the pore B in diameter.

2. Method for testing an orientation index (OI) value

Testing the OI value of the negative active material layer by using an X-ray diffractometer (XRD): Putting a negative electrode sample in the XRD diffractometer, and measuring crystal plane areas of the 004 peak and the 110 peak, denoted by C004 and C110, respectively. Calculating the OI value based on the following formula:

$$\text{OI value} = \text{C004/C110}$$

3. Method for measuring the particle size of the negative active material

Measuring the particle size of the negative active material by using a Malvern particle size analyzer: Dispersing a sample of the negative active material in ethanol serving as a dispersant, ultrasonicating the sample for 30 minutes, and then adding the sample into the Malvern particle size analyzer to measure $D_{v50}$, $D_{n10}$, and $D_{v90}$ of the negative active material.

4. Method for measuring the specific surface area of the negative active material

Measuring the specific surface area of the negative active material by means of nitrogen adsorption/desorption by using a specific surface area analyzer (Tristar II 3020M): Drying a sample of the negative active material in a vacuum drying oven, and then loading the sample into a sample tube and measuring the specific surface area in the analyzer.

5. DSC test method

Charging a lithium-ion battery to a voltage of 4.45 V, and then disassembling the battery. Drying the negative electrode, and scraping off the negative active material layer. Heating up the negative active material layer to 800 °C at a speed of 10 °C/min under an N2 atmosphere by using a synchronous thermal analyzer (STA 449F3), and testing the DSC exothermic curve of the material.

6. Method for testing the gram capacity of the lithium-ion battery

Discharging the lithium-ion battery at a current of 0.05 C to a voltage of 5.0 mV, and discharging the battery at a current of 50 $\mu$A to a voltage of 5.0 mV. Discharging the battery at a current of 10 $\mu$A to a voltage of 5.0 mV, and charging the battery at a current of 0.1 C to a voltage of 2.0 V Recording the capacity of the lithium-ion battery at this moment as a gram capacity. 0.05 C is a current value that is 0.05 times the nominal gram capacity, and 0.1 C is a current value that is 0.1 times the nominal gram capacity.

7. Method for testing the cycle thickness expansion rate of the lithium-ion battery

Measuring the thickness of the lithium-ion battery at a voltage of 3.95 V under a temperature of 25 °C, and denoting the thickness as $H_0$. Charging and discharging the lithium-ion battery at a current rate of 1.5 C for 500 cycles, during which the thickness of the lithium-ion battery at a voltage of 4.45 V is measured at the end of every 50 cycles, where the thickness is denoted as $H_n$. Calculating the cycle thickness expansion rate of the lithium-ion battery based on the following formula:

$$\text{Cycle thickness expansion rate at the end of the corresponding number of cycles}$$

$$= (H_n - H_0)/H_0 \times 100\%.$$

III. Test results

Table 1 shows process parameters of the prepared negative active material. The weight percent of the binder is a ratio of the weight of the binder to the weight of graphite.

Table 1

| Serial number | Weight percent of binder (%) | $D_{v50}$ of petroleum coke ($\mu$m) | Heating temperature in step a) (°C) | Heating time in step a) (hour) | Graphitization temperature in step b) (°C) | Graphitization time in step b) (hour) |
|---|---|---|---|---|---|---|
| Embodiment 1 | 5 | 6 | 500 | 3 | 3000 | 150 |
| Embodiment 2 | 5 | 7 | 500 | 3 | 3000 | 150 |
| Embodiment 3 | 5 | 8 | 500 | 3 | 3000 | 150 |
| Embodiment 4 | 5 | 9 | 500 | 3 | 3000 | 150 |
| Embodiment 5 | 8 | 6 | 500 | 3 | 3000 | 150 |
| Embodiment 6 | 8 | 7 | 500 | 3 | 3000 | 150 |
| Embodiment 7 | 8 | 8 | 500 | 3 | 3000 | 150 |
| Embodiment 8 | 8 | 9 | 500 | 3 | 3000 | 150 |
| Embodiment 9 | 11 | 6 | 500 | 3 | 3000 | 150 |
| Embodiment 10 | 11 | 7 | 500 | 3 | 3000 | 150 |
| Embodiment 11 | 11 | 8 | 500 | 3 | 3000 | 150 |

(continued)

| Serial number | Weight percent of binder (%) | $D_{v50}$ of petroleum coke ($\mu$m) | Heating temperature in step a) (°C) | Heating time in step a) (hour) | Graphitization temperature in step b) (°C) | Graphitization time in step b) (hour) |
|---|---|---|---|---|---|---|
| Embodiment 12 | 11 | 9 | 500 | 3 | 3000 | 150 |
| Embodiment 13 | 14 | 6 | 500 | 3 | 3000 | 150 |
| Embodiment 14 | 14 | 7 | 500 | 3 | 3000 | 150 |
| Embodiment 15 | 14 | 8 | 500 | 3 | 3000 | 150 |
| Embodiment 16 | 14 | 9 | 500 | 3 | 3000 | 150 |
| Comparative Embodiment 1 | 0 | 8 | 500 | 3 | 3000 | 150 |
| Comparative Embodiment 2 | 20 | 8 | 500 | 3 | 3000 | 150 |

Table 2 shows results of the relevant performance test. The DSC exothermic peak temperature means the DSC exothermic peak temperature of the negative active material layer when the lithium-ion battery is charged to a voltage of 4.45 V, and is used to represent the thermal stability of the negative electrode material.

**Table 2**

| Serial number | $D_{v50}$ of graphite particles ($\mu$m) | Diameter of pore A (nm) | Differential mercury intake of pore A (mL/g·$\mu$m$^{-1}$) | Diameter of pore B (nm) | Differential mercury intake of pore B (mL/g·$\mu$m$^{-1}$) | Volume ratio between pore B and pore A | Ratio C004/ C110 | DSC exothermic peak temperature (°C) | Gram capacity (mAh/g) | Expansion rate |
|---|---|---|---|---|---|---|---|---|---|---|
| Embodiment 1 | 7.2 | 59.6 | 0.150 | 690.2 | 0.172 | 1.15 | 16 | 330 | 353 | 8.2% |
| Embodiment 2 | 8.7 | 63.5 | 0.152 | 688.2 | 0.17 | 1.13 | 18 | 327 | 355 | 8.4% |
| Embodiment 3 | 10.1 | 67.2 | 0.155 | 670.8 | 0.164 | 1.06 | 19 | 325 | 356 | 8.6% |
| Embodiment 4 | 11.2 | 69.6 | 0.160 | 661.6 | 0.16 | 1.04 | 20 | 326 | 358 | 8.9% |
| Embodiment 5 | 9.0 | 60.0 | 0.156 | 711.5 | 0.183 | 1.17 | 13 | 312 | 352 | 7.8% |
| Embodiment 6 | 10.4 | 64.4 | 0.160 | 704.9 | 0.178 | 1.12 | 14 | 309 | 354 | 8.0% |
| Embodiment 7 | 12.2 | 68.2 | 0.167 | 696.1 | 0.174 | 1.07 | 16 | 310 | 355 | 8.3% |
| Embodiment 8 | 13.4 | 70.5 | 0.171 | 682.7 | 0.167 | 0.99 | 17 | 306 | 356 | 8.4% |
| Embodiment 9 | 12.0 | 61.0 | 0.163 | 759.9 | 0.212 | 1.25 | 9 | 291 | 351 | 6.6% |
| Embodiment 10 | 14.2 | 65.2 | 0.170 | 744.3 | 0.203 | 1.22 | 10 | 290 | 352 | 6.9% |
| Embodiment 11 | 17.5 | 68.8 | 0.178 | 731.7 | 0.196 | 1.11 | 11 | 288 | 353 | 7.0% |
| Embodiment 12 | 19.8 | 71.6 | 0.184 | 720.6 | 0.188 | 1.02 | 12 | 289 | 354 | 7.2% |
| Embodiment 13 | 14.5 | 61.5 | 0.169 | 791.3 | 0.23 | 1.42 | 6 | 285 | 348 | 6.8% |

| Serial number | $D_{v50}$ of graphite particles ($\mu$m) | Diameter of pore A (nm) | Differential mercury intake of pore A (mL/g·$\mu$m$^{-1}$) | Diameter of pore B (nm) | Differential mercury intake of pore B (mL/g·$\mu$m$^{-1}$) | Volume ratio between pore B and pore A | Ratio C004/ C110 | DSC exothermic peak temperature (°C) | Gram capacity (mAh/g) | Expansion rate |
|---|---|---|---|---|---|---|---|---|---|---|
| Embodiment 14 | 18.9 | 69.1 | 0.178 | 779.2 | 0.225 | 1.26 | 7 | 286 | 349 | 6.9% |
| Embodiment 15 | 20.5 | 70.1 | 0.185 | 768.8 | 0.221 | 1.19 | 8 | 282 | 351 | 7.0% |
| Embodiment 16 | 21.6 | 72.9 | 0.190 | 757.4 | 0.214 | 1.17 | 9 | 280 | 352 | 7.2% |
| Comparative Embodiment 1 | 8.0 | 65.1 | 0.145 | 501.8 | 0.106 | 0.70 | 21 | 349 | 358 | 9.5% |
| Comparative Embodiment 2 | 25.0 | 75.0 | 0.194 | 832.5 | 0.255 | 1.36 | 6 | 267 | 346 | 6.7% |

As can be seen from Embodiments 1, 5, 9, and 13, Embodiments 2, 6, 10, and 14, Embodiments 3, 7, 11, and 15, and Embodiments 4, 8, 12, and 16, in preparing the negative active material, when $D_{v50}$ of the graphite precursor petroleum coke remains constant, with the increase of the weight percent of the high-viscosity binder, $D_{v50}$ of the graphite particles of the negative active material increases; the diameter of the pore A remains basically unchanged, and the differential mercury intake of the pore A increases; and both the diameter and the differential mercury intake of the pore B increase. That may be because the porosity of the pore A represents the packing void between primary particles in the secondary particles, and the porosity of the pore B mainly represents the void caused by the packing of the secondary particles. When the diameter of the primary particles is constant, the size of the packing void of the primary particles remains unchanged, and therefore, the diameter of the pore A is basically unchanged. When the content of the binder increases and more primary particles are compounded in the secondary particles, there are more voids, and the differential mercury intake of the pore A increases. The compounding stability of the secondary particles increases, the particle size increases, the voids between the particles enlarge, and the number of voids also increases. Accordingly, the diameter and the differential mercury intake of the pore B also increase. After the content of the binder increases, the expansion between particles can be suppressed mutually, and the cycle thickness expansion rate of the lithium-ion battery becomes lower. However, as can be seen from Comparative Embodiment 2, the excessively high content of the binder reduces the gram capacity of the negative active material and affects the energy density of the negative active material.

As shown in Comparative Embodiment 1, no high-viscosity binder is added in preparing the negative active material. The negative active material is primary particles, which are not compounded to form secondary particles. Therefore, after cold pressing, the particles in the negative active material layer are arranged in the same orientation and very compactly, the diameter of the pore B is relatively small, and the differential mercury intake is small. Consequently, the cycle thickness expansion rate of the lithium-ion battery is relatively high, and the overall performance is relatively low. As shown in Comparative Embodiment 2, a relatively large amount of high-viscosity binder is added in preparing the negative active material, the degree of compounding between particles is high, and the particle arrangement in the negative electrode film is isotropic. In addition, the diameter of the pore B between particles is relatively large, the differential mercury intake is large, and the cycle thickness expansion rate of the lithium-ion battery is relatively low. However, the relatively low performance of lithium storage of the binder affects the gram capacity of the negative active material. In addition, the relatively large diameter of the secondary particles affects the processing performance.

As can be seen from Embodiments 1 to 4, Embodiments 5 to 8, Embodiments 9 to 12, and Embodiments 13 to 16, when the content of the high-viscosity binder is constant, with the increase of $D_{v50}$ of the petroleum coke serving as the precursor of the negative active material, the diameter and the differential mercury intake of the pore A in the negative active material layer increase, the diameter and the corresponding differential mercury intake of the pore B decrease, the OI value increases, and the gram capacity increases, but the thickness expansion rate is affected.

Table 3 shows how $D_{v90}$ and $D_{n10}$ of the negative active material affect the particle size ratio variation value $(D_{1v50}-D_{2v50})/D_{1v50}$, the specific surface area (BET) growth rate, and the first-cycle Coulombic efficiency and the cycle thickness expansion rate of the lithium-ion battery. The negative active material in Embodiments 17 to 32 are prepared from the negative active material in Embodiment 11. By screening and grading the negative active material in Embodiment 11, large particles and tiny particles in the negative active material are removed to adjust the particle size.

$D_{1v50}$ is the powder size of the negative active material before being pressed, and $D_{2v50}$ is the powder size of the negative active material after being pressed under a pressure of 1 ton. $B_1$ is the specific surface area of the negative active material before being pressed, and $B_2$ is the specific surface area of the negative active material after being pressed under a pressure of 1 ton.

A method for exerting a pressure on the negative active material is: Putting $1.0\pm0.05$ grams of negative active material powder onto a mold that is 13 mm in diameter by using an electronic pressure tester (SUNSTEST UTM7305), exerting a pressure of 1 ton on the negative active material powder and keeping the pressure for 5 seconds, and then removing the powder after the pressure is relieved.

**Table 3**

| Serial number | $D_{v90}$ ($\mu$m) | $D_{n10}$ ($\mu$m) | $D_{v90}/D_{n10}$ | $D_{1v50}$ ($\mu$m) | $D_{2v50}$ ($\mu$m) | $(D_{1v50}-D_{2v50})$ $/D_{1v50} \times 100\%$ | $B_1$ ($m^2$/g) | $B_2$ ($m^2$/g) | $(B_2-B_1)/B_1$ $\times 100\%$ | First-cycle coulombic efficiency | Expansion rate |
|---|---|---|---|---|---|---|---|---|---|---|---|
| Embodiment 11 | 35.7 | 1.4 | 25.5 | 17.5 | 13.2 | 25% | 1.25 | 2.31 | 85% | 90.0% | 7.0% |
| Embodiment 17 | 28.4 | 1.4 | 20.3 | 13.1 | 11.3 | 14% | 1.35 | 2.16 | 60% | 90.7% | 7.6% |
| Embodiment 18 | 30.3 | 1.4 | 21.6 | 14.4 | 11.7 | 19% | 1.33 | 2.23 | 68% | 90.6% | 7.5% |
| Embodiment 19 | 32.1 | 1.4 | 22.9 | 15.6 | 12.1 | 22% | 1.33 | 2.24 | 68% | 90.4% | 7.1% |
| Embodiment 20 | 34.7 | 1.4 | 24.8 | 16.9 | 12.9 | 24% | 1.31 | 2.28 | 74% | 90.2% | 6.8% |
| Embodiment 21 | 28.4 | 4.1 | 6.9 | 13.2 | 11.3 | 14% | 1.24 | 2.21 | 78% | 91.1% | 7.4% |
| Embodiment 22 | 30.5 | 4.1 | 7.4 | 14.5 | 11.6 | 20% | 1.19 | 2.15 | 81% | 91.4% | 7.3% |
| Embodiment 23 | 32.2 | 4.1 | 7.9 | 15.7 | 12.1 | 23% | 1.13 | 2.18 | 93% | 91.6% | 7.0% |
| Embodiment 24 | 34.9 | 4.2 | 8.3 | 17.1 | 12.8 | 25% | 1.12 | 2.16 | 93% | 91.8% | 6.7% |
| Embodiment 25 | 28.5 | 6.8 | 4.2 | 13.5 | 11.4 | 16% | 1.18 | 2.12 | 80% | 91.3% | 7.4% |
| Embodiment 26 | 30.5 | 6.8 | 4.5 | 14.6 | 11.7 | 20% | 1.11 | 2.01 | 81% | 91.6% | 6.9% |
| Embodiment 27 | 32.2 | 6.9 | 4.7 | 15.9 | 12.3 | 23% | 1.02 | 1.99 | 95% | 91.5% | 6.6% |
| Embodiment 28 | 34.9 | 6.9 | 5.1 | 17.2 | 12.9 | 25% | 0.96 | 1.93 | 101% | 91.9% | 6.5% |
| Embodiment 29 | 28.8 | 9.2 | 3.1 | 13.7 | 11.5 | 16% | 0.98 | 2.01 | 105% | 91.5% | 7.4% |

(continued)

| Serial number | $D_{v90}$ (μm) | $D_{n10}$ (μm) | $D_{v90}/D_{n10}$ | $D_{1v50}$ (μm) | $D_{2v50}$ (μm) | $(D_{1v50}-D_{2v50})/D_{1v50} \times 100\%$ | $B_1$ (m²/g) | $B_2$ (m²/g) | $(B_2-B_1)/B_1 \times 100\%$ | First-cycle coulombic efficiency | Expansion rate |
|---|---|---|---|---|---|---|---|---|---|---|---|
| Embodiment 30 | 30.7 | 9.3 | 3.3 | 14.9 | 11.8 | 21% | 0.94 | 1.99 | 112% | 91.5% | 7.0% |
| Embodiment 31 | 32.3 | 9.4 | 3.4 | 16.0 | 12.2 | 24% | 0.87 | 1.92 | 121% | 91.6% | 6.6% |
| Embodiment 32 | 35.0 | 9.4 | 3.7 | 17.3 | 12.9 | 25% | 0.80 | 1.92 | 140% | 92.0% | 6.5% |

Comparison between Embodiments 17 to 20, embodiments 21 to 24, embodiments 25 to 28, and embodiments 29 to 32 shows that when $D_{n10}$ remains constant and $D_{v90}$ decreases, the particle size ratio variation value $(D_{1c50}-D_{2v50})/D_{1v50}$ decreases, the specific surface area (BET) growth rate decreases, the first-cycle Coulombic efficiency increases, but the cycle thickness expansion rate increases. Comparison between Embodiments 17, 21, 25, and 29, Embodiments 18, 22, 26, and 30, Embodiments 19, 23, 27, and 31, and Embodiments 20, 24, 28, and 32 shows that when $D_{n10}$ increases, the number of tiny particles in the negative electrode decreases, the specific surface area (BET) growth rate increases significantly, the first-cycle Coulombic efficiency improves significantly, and slight improvement is made in expansion.

References to "embodiments", "some embodiments", "an embodiment", "another example", "example", "specific example" or "some examples" throughout the specification mean that at least one embodiment or example in this application includes specific features, structures, materials, or characteristics described in the embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment or example in this application. In addition, specific features, structures, materials, or characteristics herein may be combined in one or more embodiments or examples in any appropriate manner.

Although illustrative embodiments have been demonstrated and described above, a person skilled in the art understands that the above embodiments are not to be construed as a limitation on this application, and changes, replacements, and modifications may be made to the embodiments without departing from the principles, and scope of this application.

**Claims**

1. A negative electrode, wherein the negative electrode comprises a current collector and a negative active material layer disposed on the current collector, the negative active material layer comprises negative active material particles, the negative active material particles comprise secondary particles, the negative active material layer comprises a pore A, a diameter of the pore A is 59 nm to 73 nm when tested by a mercury intrusion porosimetry, and a ratio C004/C110 of the negative active material layer is 6 to 20.

2. The negative electrode according to claim 1, wherein when tested by the mercury intrusion porosimetry, a differential mercury intake of the pore A is 0.150 to 0.190 mL/g·$\mu$m$^{-1}$.

3. The negative electrode according to claim 1, wherein the negative active material layer comprises a pore B, and, when tested by the mercury intrusion porosimetry, a diameter of the pore B is 660 nm to 800 nm, and a differential mercury intake of the pore B is 0.160 to 0.230 mL/g·$\mu$m$^{-1}$.

4. The negative electrode according to claim 3, wherein a volume ratio between the pore B and the pore A is 0.7:1 to 1.42:1.

5. The negative electrode according to claim 1, wherein the negative active material particles satisfy at least one of conditions (a) to (d):

    (a) $D_{v50}$ of the negative active material particles is 7.2 to 21.6 $\mu$m;
    (b) $D_{v90}$ of the negative active material particles is 28.4 to 40.0 $\mu$m;
    (c) $D_{n10}$ of the negative active material particles is 1.4 to 9.4 $\mu$m; or
    (d) $D_{v90}$ and $D_{n10}$ of the negative active material particles satisfy: $D_{v90}/D_{n10} \leq 26$.

6. The negative electrode according to claim 1, wherein a powder particle size of the negative active material particles before being pressed is $D_{1v50}$, a powder particle size of the negative active material particles after being pressed under a pressure of 1 ton is $D_{2v50}$, and $(D_{1v50} - D_{2v50})/D_{1v50} \times 100\% \leq 25\%$.

7. The negative electrode according to claim 1, wherein a specific surface area of the negative active material particles is 0.8 to 2.0 m$^2$/g.

8. The negative electrode according to claim 1, wherein a specific surface area of the negative active material particles before being pressed is $B_1$, a specific surface area of the negative active material particles after being pressed under a pressure of 1 ton is $B_2$, and $(B_2 - B_1)/B_1 \times 100\% \leq 140\%$.

9. An electrochemical device, wherein the electrochemical device comprises the negative electrode according to any one of claims 1 to 8.

10. The electrochemical device according to claim 9, wherein when the electrochemical device is discharged to a voltage of 3 V, a specific surface area of the negative active material particles is 1.5 to 2.4 $m^2$/g.

11. The electrochemical device according to claim 9, wherein when the electrochemical device is charged to a voltage of 4.45 V, as tested by a differential scanning calorimetry (DSC), a maximum exothermic peak of the negative active material layer is 280 to 330 °C.

12. The electrochemical device according to claim 9, wherein when the electrochemical device is discharged to a voltage of 3 V, a powder particle size of the negative active material particles is $D_{av50}$, a powder particle size of the negative active material particles after being pressed under a pressure of 1 ton is $D_{bv50}$, and $(D_{av50} - D_{bv50})/D_{av50} \times 100\% \leq 2\%$.

13. The electrochemical device according to claim 9, wherein when the electrochemical device is discharged to a voltage of 3 V, a specific surface area of the negative active material particles before being pressed is $B_{11}$, a specific surface area of the negative active material particles after being pressed under a pressure of 1 ton is $B_{22}$, and $(B_{22} - B_{11})B_{11} \times 100\% \leq 40\%$.

14. An electronic device, comprising the electrochemical device according to any one of claims 9 to 13.

Pore distribution curve

Figure 1

## INTERNATIONAL SEARCH REPORT

| | International application No. |
|---|---|
| | **PCT/CN2022/075646** |

**A. CLASSIFICATION OF SUBJECT MATTER**

H01M 4/133(2010.01)i; H01M 4/1393(2010.01)i; H01M 4/587(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, DWPI, SIPOABS: 负极, 阳极, 一次颗粒, 一次粒子, 初级粒子, 初级颗粒, 二次粒子, 二次颗粒, 孔径, 孔隙, 空隙, 大孔, 介孔, 体积, 压汞, 进汞量, anode, primary particle, secondary particle, aperture, porosity, interspace, interstice, macropore, interpose, bulk, volume, mercury intrusion, mercury intake, 004, 110, C004, C110

**C. DOCUMENTS CONSIDERED TO BE RELEVANT**

| Category* | Citation of document, with indication, where appropriate, of the relevant passages | Relevant to claim No. |
|---|---|---|
| PX | CN 113078292 A (NINGDE AMPEREX TECHNOLOGY LTD.) 06 July 2021 (2021-07-06) claims 1-14 | 1-14 |
| X | CN 111370695 A (NINGDE AMPEREX TECHNOLOGY LTD.) 03 July 2020 (2020-07-03) description, paragraphs 4-67 | 1-14 |
| A | CN 103959520 A (TOYOTA MOTOR CORPORATION) 30 July 2014 (2014-07-30) entire document | 1-14 |
| A | CN 109553080 A (HUNAN JINYE HIGH-TECH CO., LTD.) 02 April 2019 (2019-04-02) entire document | 1-14 |
| A | CN 104272520 A (TOYOTA MOTOR CORPORATION) 07 January 2015 (2015-01-07) entire document | 1-14 |
| A | WO 2021044482 A1 (SHOWA DENKO MATERIAL CO., LTD.) 11 March 2021 (2021-03-11) entire document | 1-14 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2022** | **20 April 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/075646**

| Patent document cited in search report | | | Publication date (day/month/year) | Patent family member(s) | | | Publication date (day/month/year) |
|---|---|---|---|---|---|---|---|
| CN | 113078292 | A | 06 July 2021 | None | | | |
| CN | 111370695 | A | 03 July 2020 | WO | 2021185014 | A1 | 23 September 2021 |
| | | | | CN | 111370695 | B | 18 May 2021 |
| CN | 103959520 | A | 30 July 2014 | KR | 20140105794 | A | 02 September 2014 |
| | | | | WO | 2013080379 | A1 | 06 June 2013 |
| | | | | US | 2015171414 | A1 | 18 June 2015 |
| | | | | WO | 2013080379 | S | 27 April 2015 |
| CN | 109553080 | A | 02 April 2019 | WO | 2020073803 | A1 | 16 April 2020 |
| | | | | CN | 109553080 | B | 01 May 2020 |
| | | | | KR | 20210068497 | A | 09 June 2021 |
| | | | | EP | 3865457 | A1 | 18 August 2021 |
| | | | | JP | 2022502827 | W | 11 January 2022 |
| | | | | US | 2021391577 | A1 | 16 December 2021 |
| CN | 104272520 | A | 07 January 2015 | KR | 20150016257 | A | 11 February 2015 |
| | | | | JP | WO2013161083 | A1 | 21 December 2015 |
| | | | | WO | 2013161083 | A1 | 31 October 2013 |
| | | | | US | 2015086851 | A1 | 26 March 2015 |
| | | | | JP | 5963022 | B2 | 03 August 2016 |
| | | | | CN | 104272520 | B | 26 October 2016 |
| | | | | KR | 101670569 | B1 | 28 October 2016 |
| | | | | US | 9831525 | B2 | 28 November 2017 |
| WO | 2021044482 | A1 | 11 March 2021 | None | | | |

Form PCT/ISA/210 (patent family annex) (January 2015)